# EUROPÄISCHE PATENTANMELDUNG

(11) **EP 2 312 720 A2**
(43) Veröffentlichungstag der Anmeldung: **20.04.2011**
(21) Anmeldenummer: 10172336.9
(22) Anmeldetag: 10.08.2010
(51) Int. Cl.: H02J 3/28

(54) **Anordnung zur Leistungszuführung an ein Arbeitssystem**

(30) Priorität: 24.09.2009 DE 102009042872
(71) Anmelder: SIEMENS AKTIENGESELLSCHAFT, 80333 München (DE)
(72) Erfinder: Krejtschi, Jürgen, 90478, Nürnberg (DE); Schäfers, Elmar, 90763, Fürth (DE)

(57) **Zusammenfassung**

Anordnung zur Leistungszuführung an ein System (1), welches eine erste elektrische Antriebsmaschine (2), welche mechanische Leistung an ein erstes Arbeitssystem (51) abgeben kann, wobei das erste Arbeitssystem (1) mechanische Leistung bzw. mechanische Energie aufnehmen und/oder abgeben kann, welches eine zweite elektrische Antriebsmaschine (2) aufweist, welche mechanische Leistung an ein zweites Arbeitssystem (52) abgeben kann, wobei das zweite Arbeitssystem mechanische Leistung bzw. mechanische Energie aufnehmen kann, welches einen ersten kinetischen Energiespeicher (3,4), welcher eine erste elektrische Energieaustauschmaschine (4) aufweist, die mit der ersten elektrischen Antriebsmaschine (2) elektrisch verbunden ist, und welches einen zweiten kinetischen Energiespeicher (3,4), welcher eine zweite elektrische Energieaustauschmaschine (4) aufweist, die mit der zweiten elektrischen Antriebsmaschine (2) elektrisch verbunden ist, aufweist.

## Beschreibung

Die Erfindung betrifft eine Anordnung zur Leistungszuführung bei elektrischen Antrieben, wobei eine Zwischenspeicherung von Energie bereitgestellt ist.

Zumindest zwei elektrische Antriebsmaschinen sind mit einem Arbeitssystem gekoppelt. Unter dem Begriff Arbeitssystem sind sämtliche mögliche Maschinenanwendungen bzw. Maschinen bzw. Teile davon zu verstehen. Dies sind beispielsweise Arbeitssysteme in welchen:
- Prozesse, z.B. Verarbeitungsprozesse, oder
- Verfahren, z.B. Herstellungsverfahren, oder
- Bewegungsabläufe, z.B. Transportabläufe ablaufen.

Ein Arbeitssystem ist beispielsweise des Weiteren eine Werkzeugmaschine, eine Produktionsmaschine oder ein Bearbeitungszentrum.

Eine Aufgabe der vorliegenden Erfindung ist es, eine Anordnung zur Leistungszuführung an ein Arbeitssystem bereitzustellen, welche für dynamische Prozesse geeignet ist und mit welcher kostengünstig und/oder energieeffizient Leistung bzw. Energie bereitgestellt werden können.

Eine Lösung der Aufgabe wird beispielsweise mit den Merkmalen des Patentanspruchs 1 erreicht. Vorteilhafte Weiterbildungen sind den Unteransprüchen 2 bis 14 zu entnehmen.

Eine Anordnung zur Leistungsführung weist zumindest zwei elektrische Antriebsmaschinen und zumindest zwei kinetische Energiespeicher, welche eine elektrische Energieaustauschmaschine aufweisen, auf. Die elektrischen Energieaustauschmaschinen sind mit der jeweiligen elektrischen Antriebsmaschine elektrisch verbunden.

Bei einer Vielzahl von Produktions- und auch Werkzeugmaschinenanwendungen treten Prozesse oder Prozessabschnitte auf, welchen in bestimmten Phasen, insbesondere kurzfristig, hohe Leistungen zugeführt werden müssen, während in anderen Prozessphasen lediglich geringere Leistungen oder elektrische Ströme bzw. Drehmomente zuzuführen sind.

Weist ein Gesamtprozess mehrere Einzelprozesse aus (dies ist beispielsweise bei Pressenlinien gegeben), so kann durch eine Steuerung des zeitlichen Ablaufs der Einzelprozesse gezielt eine Phasenverschiebung von Leistungsprofilen der Einzelprozesse eingestellt werden, so dass sich diese bezüglich Ihrer Leistungsspitzen weitestgehend kompensieren.

Bei einem Verfahren zum Betrieb von Produktions- oder Werkzeugmaschinen, insbesondere bei einem Verfahren zur Bewegungsführung von Produktions- oder Werkzeugmaschinen, kann die erforderliche Leistung während aller Prozessphasen beispielsweise mittels eines oder mehrerer Umrichter zugeführt werden. Dabei kann ein Spannungs-Zwischenkreis oder auch ein Strom-Zwischenkreis eines oder mehrerer Umrichter als Energiespeicher genutzt werden. Vorteilhaft ist ein Leistungstransfer zwischen verschiedenen Einzelprozessen vorgesehen, wobei zumindest zwei Einzelprozessen jeweils eine elektrische Antriebsmaschine zugeordnet ist. Der Leistungstransfer zwischen den Einzelprozessen sollte robust, effizient und/oder einfach erfolgen.

Bei der Speisung von mehreren Einzelprozessen mit Spitzenlastanteilen kann zumindest eine teilweise Kompensation der Leistungsspitzen der Einzelprozesse untereinander durchgeführt werden. Dies gelingt beispielsweise dadurch, dass die Leistungsteile der einzelnen elektrischen Antriebsmaschinen an einen gemeinsamen Zwischenkreis angeschlossen sind. Bei geregelten Zwischenkreisen mit niedriger Kapazität kann es sich jedoch ergeben, dass eine nicht exakte Kompensation der Einzelprozesse untereinander zu einem sofortigen Anstieg der Zwischenkreisspannung führt, was wiederum eine Rückspeisung ins Netz durch die Einspeisung zur Folge hat. Die Energie nimmt also einen Weg über viele Stationen, die ihrerseits mit Verlusten behaftet sind.

Eine weitere Möglichkeit Energie zu speichern ist ein kinetischer Energiespeicher. Eine anzutreibende Welle ist z.B. mit einem Schwungrad mechanisch direkt verbunden, so dass Leistungsspitzen geglättet werden und somit vom elektrischen Antriebssystem ferngehalten werden. Das Zulassen einer Drehzahländerung ist bei diesem Ansatz allerdings schwierig, was insbesondere bei einem dynamischen Prozess unbefriedigend ist.

In einer Ausgestaltung weist eine Anordnung zur Leistungszuführung an ein Arbeitssystem folgendes auf:
- eine erste elektrische Antriebsmaschine, welche mechanische Leistung an ein erstes Arbeitssystem abgeben kann, wobei das erste Arbeitssystem mechanische Leistung bzw. mechanische Energie aufnehmen und/oder abgeben kann;
- eine zweite elektrische Antriebsmaschine, welche mechanische Leistung an ein zweites Arbeitssystem abgeben kann, wobei das zweite Arbeitssystem mechanische Leistung bzw. mechanische Energie aufnehmen kann;
- einen ersten kinetischen Energiespeicher, welcher eine erste elektrische Energieaustauschmaschine aufweist, die mit der ersten elektrischen Antriebsmaschine elektrisch verbunden ist und
- einen zweiten kinetischen Energiespeicher, welcher eine zweite elektrische Energieaustauschmaschine aufweist, die mit der zweiten elektrischen Antriebsmaschine elektrisch verbunden ist.

Die Anordnung zur Leistungszuführung an ein Arbeitssystem oder an eine Vielzahl von Arbeitssystemen betrifft dabei nicht nur die Zuführung von Leistung/Energie zum Arbeitssystem, sondern auch die Rückspeisung von Leistung/Energie vom Arbeitssystem zurück zur Anordnung. Damit wird eine Rückspeisefähigkeit ermöglicht um beispielsweise Energie zu speichern. Unter der Anordnung zur Leistungszuführung an ein Arbeitssystem ist also auch eine Anordnung zur Leistungsabführung zu verstehen.

Nach einer Ausgestaltung der Anordnung kann, wenn ein System eine Vielzahl von Einzelprozessen aufweist, eine erforderliche mechanische Leistung dem Einzelprozess jeweils über einen oder mehrer Synchronmotoren zugestellt werden. Ein oder mehrere Einzelprozesse können in bestimmten Abschnitten sehr hohe Leistungen benötigen. Derartige Leistungsspitzen können zum Beispiel durch Verwendung von Kondensatorbatterien oder Schwungräder (kinetischer Energiespeicher) in den Antriebssystemen der Einzelprozesse getrennt oder über eine Kopplung der Zwischenkreise der Einzelsysteme gepuffert werden oder auch alternativ bzw. zusätzlich mittels einer direkten energetischen Kopplung verknüpft werden. Bei einer möglichst direkten energetischen Kopplung der Einzelprozesse, können Verluste reduziert werden. Mittels einer als Schleifringläufer ausgeführten Asynchronmaschine als elektrische Energieaustauschmaschine, die Wechselanteile der Antriebsleistung eines Prozesses puffert, kann eine direkte energetische Kopplung erzielt werden. Ein Schleifringläufer oder auch eine Vielzahl von Schleifringläufern können direkt mit der den Prozess treibenden Synchronmaschine verbunden werden. Ein Antriebsverbund weist z.B. einen Schleifringläufer als Energieaustauschmaschine und eine Synchronmaschine als elektrische Antriebsmaschine auf. In diesem Antriebsverbund ist die Synchronmaschine mit der Asynchronmaschine (Schleifringläufer) direkt elektrisch verschalten.

Sind nun mehrere Antriebsverbünde parallel zu schalten, so ist mit einer mechanischen Kopplung der Schleifringläufer eine energetische Kopplung der Einzelprozesse erzielbar. Eine Leistungsabgabe bzw. Aufnahme der Synchronmaschine wirkt sich direkt auf den zugehörigen Schleifringläufer aus. In Form einer Drehzahländerung findet dort eine direkte Wandlung von elektrischer in mechanische Energie und umgekehrt statt. Ursache für diese Drehzahländerung ist natürlich ein entsprechendes Drehmoment der Maschine. Verkoppelt man nun z.B. zwei Arbeitsprozesse, indem man die zugehörigen Schleifringläufer mechanisch koppelt, und setzt man weiterhin voraus, dass durch entsprechende zeitliche Steuerung der Einzelprozesse erreicht wird, dass ein erster Prozess dann Leistung abgibt, wenn ein zweiter Prozess Leistung braucht, so wird an einer ersten elektrischen Energieaustauschmaschine ein positives Drehmoment erzeugt und an einer zweiten elektrischen Energieaustauschmaschine ein negatives. Dabei ist die erste elektrische Energieaustauschmaschine den ersten Prozess zugeordnet und die zweite elektrische Energieaustauschmaschine ist dem zweite Prozess zugeordnet. Durch die mechanische Kopplung der elektrischen Energieaustauschmaschinen kann jetzt ein direkter Leistungsfluss von der ersten elektrischen Antriebsmaschine des ersten Prozesses zur zweiten elektrischen Antriebsmaschine des zweiten Prozesses und damit vom ersten Prozess zum zweiten Prozess erfolgen, wobei an diesem Energieaustausch kein elektrischer Umrichter mit entsprechend einhergehenden Verlusten beteiligt ist.

Die bei getrennten Prozessen folgende Drehzahländerung der ersten elektrischen Energieaustauschmaschine und der zweiten elektrischen Energieaustauschmaschine wird zumindest teilweise kompensiert, wodurch auch eine Speiseasynchronmaschine (elektrische Speisemaschine), die den kinetischen Energiespeicher im Mittel auf einem definiertem Energieniveau halten soll, entlastet wird. Der kinetische Energiespeicher weist dabei mit einer mechanischen Welle gekoppelte elektrische Energieaustauschmaschinen, insbesondere Asynchronmaschinen, auf. Auch hierbei werden Verluste reduziert, und zudem reduziert sich die benötigte Anzahl der Speisemaschinen mit der entsprechenden Ansteuerelektronik.

In einer weiteren Ausgestaltung weist die Anordnung zur Leistungszuführung eine mechanische Kopplung des ersten kinetischen Energiespeichers mit dem zweiten kinetischen Energiespeicher auf.

In einer weiteren Ausgestaltung weist die Anordnung zur Leistungszuführung eine Speisemaschine auf, die dem ersten kinetischen Energiespeicher und/oder dem zweiten kinetischen Energiespeicher mechanische Energie zuführt. Die Zufuhr mechanischer Energie erfolgt beispielsweise kontinuierlich.

Die kinetischen Energiespeicher können die gespeicherte kinetische Energie jeweils
- über die erste elektrische Energieaustauschmaschine und die erste elektrische Antriebsmaschine an das erste Arbeitssystem, bzw.
- über die zweite elektrische Energieaustauschmaschine und die zweite elektrische Antriebsmaschine an das zweite Arbeitssystem
abgeben.

Das erste Arbeitssystem ist mit dem zweiten Arbeitssystem energetisch derart gekoppelt, dass die Arbeitssystems zur gleichen Zeit unterschiedliche Lasten aufweisen können.

Mit der Anordnung zur Leistungszuführung kann eine verschleißarme energetische Kopplung zumindest eines kinetischen Energiespeichers an eine elektrische Antriebsmaschine, welche die antreibende Maschine des Systems (Arbeitssystems) darstellt, welche zudem eine variable Drehzahlregelung der elektrischen Antriebsmaschine bei gleichzeitiger Minimierung der notwendigen Umrichterkapazität erlaubt, realisiert werden.

Die elektrische Antriebsmaschine, welche ihre mechanische Leistung an das System abgibt, ist direkt elektrisch mit der ersten elektrischen Maschine verbunden. Da sowohl die elektrische Antriebsmaschine als auch die erste elektrische Energieaustauschmaschine jeweils eine Ständerwicklung aufweisen, sind vorteilhafter Weise die beiden Ständerwicklungen der elektrischen Antriebsmaschine und der ersten elektrischen Maschine direkt elektrisch verbunden.

In einer Ausgestaltung der Erfindung stellen die elektrische Antriebsmaschine und die erste elektrische Energieaustauschmaschine eine Kombination aus Synchronmaschine und Asynchronmaschine dar. Es ist z.B. die elektrische Antriebsmaschine als Synchronmaschine und die erste elektrische Energieaustauschmaschine als Asynchronmaschine oder die elektrische Antriebsmaschine als Asynchronmaschine und die erste elektrische Energieaustauschmaschine als Synchronmaschine ausgebildet. In beiden Fällen ergibt sich eine Kombination von Synchron- und Asynchronmaschine.

Die erforderliche mechanische Leistung wird dem System bzw. dem darin ablaufenden Prozess, wie beispielsweise einem Umformprozess bei einer Presse, über einen oder mehrere elektrische Antriebsmaschinen zugestellt. Das System, d.h. der darin ablaufende Prozess weist z.B. Prozessabschnitte auf, in denen auch sehr hohe Leistungen benötigt werden können. Hohe Leistungen sind solche Leistungen, die über der durchschnittlich benötigten Leistung des Systems bzw. des Prozesses liegen.

Um hohe Leistungen von einem elektrischen Netz, welches insbesondere ein dreiphasiges Netz (Drehstromnetz) ist, fernzuhalten, das Netz also nicht mit Spitzenlasten zu belasten, ist die erfindungsgemäße Anordnung mit einer systeminternen Energiepufferung ausgestattet. Die Anordnung welche eine Kombination von Asynchronmaschine und Synchronmaschine aufweist, deren Ständerwicklungen elektrisch verbunden sind, erlaubt es zudem, die notwendige Umrichterkapazität zur Bewältigung hoher Leistungen zu reduzieren.

In einer Ausgestaltung der Anordnung, weist die elektrische Antriebsmaschine eine variable Drehzahlregelung auf. Dabei ist insbesondere ein Umrichter zur variablen Drehzahlregelung der elektrischen Antriebsmaschine vorgesehen. Mittels des Umrichters ist vorteilhafter Weise eine elektrische Frequenz der als Schleifringläufer ausgeführten elektrischen Asynchronmaschine einstellbar.

Da die elektrische Antriebsmaschine und die erste elektrische Energieaustauschmaschine des kinetischen Energiespeichers direkt elektrisch miteinander verbunden sind, ist eine Drehzahlregelung der elektrischen Antriebsmaschine über die Einstellung der elektrischen Frequenz der als Schleifringläufer ausgeführten Asynchronmaschine möglich.

Vorteilhafterweise sind Richtung und Intensität eines Leistungsflusses zwischen elektrischer Antriebsmaschine und erster elektrischer Maschine, d.h. kinetischem Energiespeicher, über eine Verschiebung der elektrischen Frequenz des Schleifringläufers gegenüber einer elektrischen Frequenz der Synchronmaschine mittels des Umrichters variabel einstellbar.

Die Leistungsübertragung vom kinetischen Energiespeicher an die elektrische Antriebsmaschine erfolgt insbesondere dadurch, dass die erste elektrische Energieaustauschmaschine übersynchron zur elektrischen Antriebsmaschine betrieben wird und somit als elektrischer Generator wirkt. Hierdurch wird die kinetisch gespeicherte Energie dem System zugeführt.

Um eine Drehzahlregelung der elektrischen Antriebsmaschine zu erlauben, ist das jeweils notwendige Drehmoment flexibel zur Verfügung zu stellen, was bedingt, dass die Schlupffrequenz zwischen Asynchronmaschine und Synchronmaschine flexibel einstellbar ist. Aus diesem Grund ist die Asynchronmaschine vorzugsweise als Schleifringläufer ausgeführt, was erlaubt, die elektrische Rotorfrequenz über einen Umrichter flexibel einzustellen. Der sich aus momentaner Drehzahl der elektrischen Antriebsmaschine und dem für die Drehzahlregelung momentan notwendigen Drehmoment ergebende notwendige Schlupf der Asynchronmaschine kann somit flexibel realisiert werden. Die gespeicherte kinetische Energie kann somit geregelt über die elektrische Antriebsmaschine dem System bzw. dem Prozess zugeführt werden.

Im Gegensatz zu einer mechanischen Lösung, beispielsweise mittels eines Automatikgetriebes, welche sehr aufwendig und verschleißbehaftet ist, kann mittels einer beschriebenen Anordnung, d.h. über die elektrische und somit verschleißfreie Verbindung von elektrischer Antriebsmaschine und kinetischem Energiespeicher, insbesondere der ersten elektrischen Energieaustauschmaschine des Energiespeichers, eine einfache Realisierung erfolgen.

Mittels einer beschriebenen Anordnung ist ein bidirektionaler Leistungsfluss zwischen dem System und dem kinetischen Energiespeicher realisiert, welcher insbesondere vom System geforderte Leistungsspitzen vom Netz fernhält.

Der kinetische Energiespeicher weist in einer Ausführung zumindest eine elektrische Speisemaschine auf, welche zur kontinuierlichen Leistungsspeisung des kinetischen Energiespeichers dient. Der kinetische Energiespeicher kann neben einer, auch eine Vielzahl von elektrischen Speisemaschinen aufweisen, wobei eine Vielzahl von elektrischen Speisemaschinen mittels einer mechanischen Welle miteinander mechanisch gekoppelt sind. Die elektrische Speisemaschine(n) ist/sind wahlweise ohne Drehzahlregelung direkt an dem Netz oder mit Drehzahlregelung über einen weiteren Umrichter betrieben.

Die elektrische Speisemaschine kann als Asynchronmaschine, insbesondere als Kurzschlussläufer, ausgebildet sein. Die Ausführung der elektrischen Speisemaschine als Asynchronmaschine hat den Vorteil, dass diese ungeregelt direkt am Netz betrieben werden kann und hinsichtlich der Dimensionierung lediglich die mittlere Leistung des Prozesses abdecken muss. Der kinetische Energiespeicher wird in einer Ausgestaltung mit nahezu unveränderlicher Drehzahl betrieben.

Bei Verwendung einer der beschriebenen Anordnungen kann ein einem System zugeordneter Umrichter derart ausgelegt werden, dass dieser Umrichter nun nicht mehr immer die gesamten benötigen Leistungen an die elektrische Antriebsmaschine, welche mechanische Leistung an das System abgibt, bereitzustellen hat. Die benötigte Leistung wird praktisch auf den Umrichter und die erste elektrische Energieaustauschmaschine des kinetischen Energiespeichers aufgeteilt. Die elektrische Speisemaschine kann dauernd mechanische Leistung bereitstellen, wobei die elektrische Speisemaschine einen Teil des kinetischen Energiespeichers darstellt, welcher auch noch die erste elektrische Energieaustauschmaschine, ggf. eine zweite und folgende elektrische Energieaustauschmaschine und z.B. ein Schwungrad umfassen kann.

In einer weiteren Ausgestaltung der Anordnung ist eine Drehzahl des kinetischen Energiespeichers entsprechend den Leistungsanforderungen des Systems und eines notwendigen Drehzahlstellbereichs des Systems in Bezug auf eine Dimensionierung des Umrichters optimiert festgelegt.

Zur flexiblen Schlupfeinstellung ist die sich aus der mechanischen Drehfrequenz der Asynchronmaschine ergebende elektrische Frequenz über den Umrichter im Drehzahlbereich der Prozesskennlinie des im System ablaufenden Prozesses zu verschieben. Hierfür ist umso mehr Umrichterleistung nötig, je größer der Betrag der Frequenzverschiebung und je größer die dabei vom Prozess angeforderte Leistung ist. Abhängig vom Prozess kann somit durch geeignete Drehzahlfestlegung der elektrischen Asynchronmaschine (hier die elektrische Energieaustauschmaschine) für eine minimal notwendige Umrichterleistung gesorgt werden. Das bedeutet, dass über den Umrichter erheblich kleinere Leistungen bereitzustellen sind und dieser somit erheblich kleiner ausgeführt werden kann, was zu Kosteneinsparungen führt.

Für eine effiziente Auslegung der Anordnung ist die Festlegung der Drehzahl des kinetischen Energiespeichers in Form der ersten, zweiten und ggf. fort folgenden elektrischen Maschine (elektrische Energieaustauschmaschine) von Bedeutung.

Insbesondere ist ein Wicklungsverhältnis der als Schleifringläufer ausgeführten Asynchronmaschine entsprechend Leistungsanforderungen des Systems und eines notwendigen Drehzahlstellbereichs des Systems in Bezug auf eine Dimensionierung des Umrichters optimal festgelegt. Die Asynchronmaschine weist sowohl eine Rotorwicklung, als auch eine Ständerwicklung auf, wobei das Wicklungsverhältnis die Anzahl der Windungszahlen der Rotor- und Ständerwicklung zueinander beschreibt.

In einer weiteren Ausgestaltung der Anordnung weist der kinetische Energiespeicher ein zusätzliches Schwungrad auf. Je nach gewünschter kinetischer Energie ist ggf. ein Schwungrad mit der ersten, zweiten, dritten, usw. elektrischen Maschine und einer ersten, oder zweiten, oder dritten, ... Speisemaschine des kinetischen Energiespeichers mechanisch koppelbar.

Durch die erfindungsgemäße Anordnung kann die Dimensionierung des benötigten Umrichters erheblich verkleinert und somit die Gesamtkosten der Anordnung gesenkt werden. Da der Leistungsbedarf bei großen Produktions- oder Werkzeugmaschinen durchaus im Megawatt-Bereich liegen kann, ist das Einsparvolumen entsprechend groß. Als ein Einsatzbeispiel seien Pressen genannt, wobei mehrere Pressen über einen kinetischen Energiespeicher gekoppelt sein können. Eine Vielzahl von Pressen weist beispielsweise je zumindest eine elektrische Antriebsmaschine auf. Die elektrischen Antriebsmaschinen der Pressen sind elektrisch mit einem gemeinsamen Energiespeicher gekoppelt. Dieser gemeinsame Energiespeicher weist eine oder mehrere elektrische Energieaustauschmaschinen auf (eine erste, zweite, dritte, ... elektrische Energieaustauschmaschine). Weiterhin kann der gemeinsame kinetische Energiespeicher ein Schwungrad oder mehrere Schwungräder aufweisen. Der gemeinsame kinetische Energiespeicher kann auch eine oder mehrere elektrische Speisemaschinen aufweisen. Diese Anordnung ist selbstverständlich nicht auf das Anwendungsgebiet Pressen begrenzt.

Die drehzahlvariable Leistungszuführung durch verschleißfreie direkte Kopplung des kinetischen Energiespeichers mit der elektrischen Antriebsmaschine stellt ein im Vergleich zu mechanischen Lösungen einfaches und somit robustes System dar. Durch den speziellen Aufbau der Anordnung können prozessbedingte Leistungsspitzen vom Netz ferngehalten werden oder diese zumindest reduziert werden.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. Des Weiteren ist die Erfindung nicht auf die in den Merkmalen gezeigten Kombinationen von Merkmalen beschränkt. Dies betrifft zusätzliche wie auch wegzulassende Merkmale. In den Zeichnungen zeigen:
- FIG 1: eine erste Anordnung zur Leistungszuführung an ein Ar- beitssystem;
- FIG 2: eine zweite Anordnung zur Leistungszuführung an ein Ar- beitssystem;
- FIG 3: eine Drehzahl-Momenten-Kennlinie;
- FIG 4: eine dritte Anordnung zur Leistungszuführung an ein Ar- beitssystem; und
- FIG 5: Drehzahlsignale bei einer Energiepufferung.

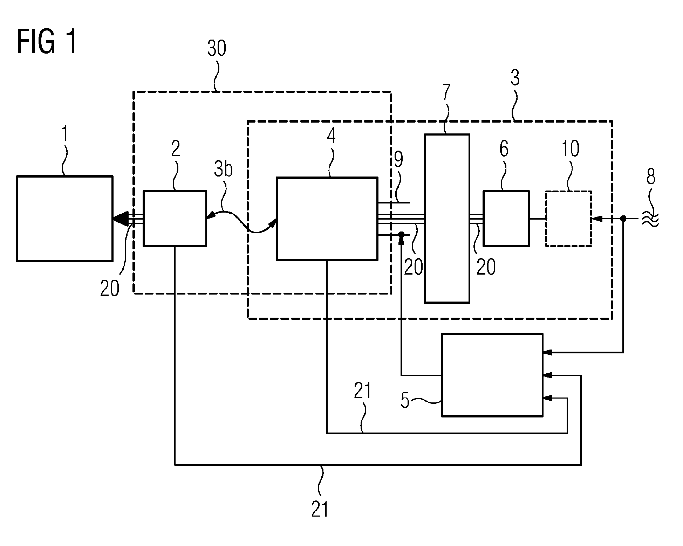

FIG 1 zeigt einen schematischen Aufbau einer ersten Anordnung. Die Anordnung weist ein System (ein Arbeitssystem) 1 auf, welches mechanische Leistung aufnimmt. Das System 1 ist z.B. eine Produktionsmaschine, die einen Umformprozess durchführt.

Die erforderliche mechanische Leistung wird dem System 1 über eine elektrische Antriebsmaschine 2 zugeführt. Die elektrische Antriebsmaschine 2 kann motorisch wie auch generatorisch betrieben werden. Die elektrische Antriebsmaschine 2 ist gemäß diesem Ausführungsbeispiel eine elektrische Synchronmaschine, wobei auch mehrere Synchronmotoren parallel geschaltet werden können, was jedoch gemäß FIG 1 nicht dargestellt ist.

Ferner weist die Anordnung einen kinetischen Energiespeicher 3 auf, welcher in diesem Ausführungsbeispiel umfasst:
- eine erste elektrische Energieaustauschmaschine 4,
- ein Schwungrad 7 und
- eine elektrische Speisemaschine 6.

Die erste elektrische Energieaustauschmaschine 4 ist als Asynchronmaschine, insbesondere Schleifringläufer, ausgebildet. Zusammen mit der elektrischen Antriebsmaschine 2 bildet die elektrische Energieaustauschmaschine 4 einen Antriebsverbund 30. Mit dem Bezugszeichen 9 ist der Schleifring bezeichnet. Die elektrische Speisemaschine 6 ist in diesem Beispiel ebenfalls als Asynchronmaschine ausgeführt. Die elektrische Speisemaschine 6 kann auch eine Synchronmaschine sein. Des Weiteren kann an Stelle der elektrischen Speisemaschine beispielsweise auch eine Verbrennungsmaschine verwendet werden. Auf das Schwungrad 7 kann auch verzichtet werden, wenn bereits genügend kinetische Energie im Läufer der ersten elektrischen Maschine gespeichert werden kann.

Die Anzahl an ersten elektrischen Maschinen 4, Speisemaschinen 6 und Schwungrädern 7 ist je nach gewünschter Energiemenge wählbar.

Die Speisemaschine 6 dient zur kontinuierlichen Leistungsspeisung des kinetischen Energiespeichers 3. Die elektrische Speisemaschine 6 ist wahlweise ohne Drehzahlregelung direkt an einem Drehstromnetz 8 oder mit Drehzahlregelung über einen weiteren Umrichter 10 betreibbar. Daher ist der weitere Umrichter 10 mittels gestrichelten Linien dargestellt.

Ferner weist die Anordnung einen Umrichter 5 auf, der zur Drehzahlregelung der elektrischen Antriebsmaschine 2 vorgesehen ist. Insbesondere dient der Umrichter 5 zur flexiblen Einstellung einer Rotorfrequenz der als Asynchronmaschine ausgebildeten ersten elektrischen Energieaustauschmaschine 4. Aus diesem Grund ist diese Asynchronmaschine als Schleifringläufer mit Schleifring 9 ausgestaltet.

Das System 1 bzw. der darin ablaufende Prozess benötigt in bestimmten Prozessabschnitten sehr hohe Leistungen. Die erste elektrische Energieaustauschmaschine 4 ist mit der elektrischen Antriebsmaschine 2 elektrisch verbunden, wobei die im kinetischen Energiespeicher 3 gespeicherte Energie bedarfsweise von der ersten elektrischen Energieaustauschmaschine 4 in elektrische Energie gewandelt, über einen Umrichter 5 frequenzangepasst und dann an die Antriebsmaschine 2 geleitet wird, welche anschließend das System 1 mit mechanischer Leistung/Energie versorgt. Über die Frequenzanpassung mittels des Umrichters 5 wird die Drehzahlregelung der elektrischen Antriebsmaschine 2 realisiert.

Die gesamte benötige Leistung des Systems 1 wird somit auf den kinetischen Energiespeicher 3 und den Umrichter 5 aufgeteilt, wodurch der Umrichter 5 erheblich verkleinert werden kann.

Zwischen erster elektrischer Energieaustauschmaschine 4, Schwungrad 7 und Speisemaschine 6 bestehen jeweils mechanische Verbindungen 20, wie z.B. eine oder mehrere Wellen.

Zwischen elektrischer Antriebsmaschine 2 und erster elektrischer Energieaustauschmaschine 4 besteht eine elektrische Verbindung (gemäß FIG 1 einfache Linie), wobei insbesondere die Ständerwicklungen der ersten elektrischen Maschine und der elektrischen Antriebsmaschine elektrisch verbunden sind. Auch zwischen Speisemaschine 6 und Drehstromnetz 8 sowie ggf. weiterem Umrichter 10 besteht eine elektrische Verbindung.

Der Umrichter 5 ist elektrisch mit dem Drehstromnetz 8 und der ersten elektrischen Energieaustauschmaschine 4, insbesondere dem Schleifring 9, verbunden. Ferner besteht zwischen elektrischer Antriebsmaschine 2, erster Maschine 4 und Umrichter 5 jeweils eine Signalleitung 21 zur Regelung der Drehzahl (Anpassung der elektrischen Frequenz).

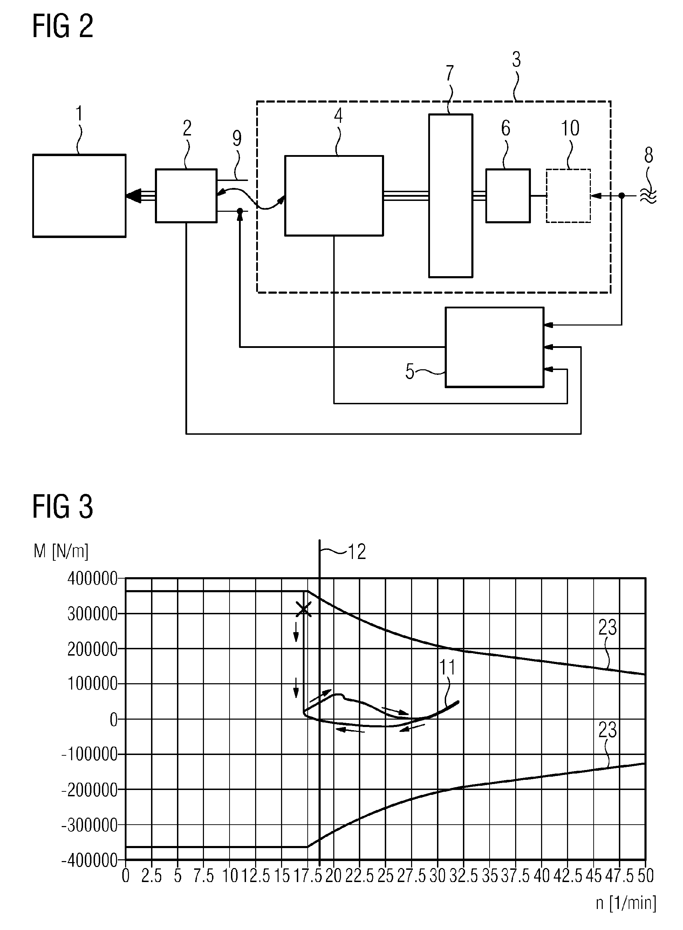

FIG 2 zeigt einen schematischen Aufbau einer weiteren Anordnung.

Wie bereits ausgeführt, stellen die elektrische Antriebsmaschine 2 und die erste elektrische Energieaustauschmaschine 4 des kinetischen Energiespeichers 3 eine Kombination aus Synchronmaschine und Asynchronmaschine dar.

Gemäß FIG 1 ist die Antriebsmaschine 2 beispielsweise als Synchronmaschine und die erste elektrische Energieaustauschmaschine 4 als Asynchronmaschine (Schleifringläufer) ausgebildet.

Gemäß FIG 2 ist nun die Antriebsmaschine 2 als Asynchronmaschine, insbesondere Schleifringläufer mit Schleifring 9, ausgebildet und die erste elektrische Energieaustauschmaschine 4 des kinetischen Energiespeichers 3 als Synchronmaschine.

Es ist eine Kombination von Synchron- und Asynchronmaschine gezeigt. Die Leistungsübertragung erfolgt vom kinetischen Energiespeicher 3 an die elektrische Antriebsmaschine 2 dadurch, dass die erste elektrische Energieaustauschmaschine 4 des Energiespeichers 3 übersynchron zur elektrischen Antriebsmaschine 2 betrieben wird und somit als elektrischer Generator wirkt. Hierdurch wird die kinetisch gespeicherte Energie dem Arbeitssystem 1 zugeführt.

Im Übrigen entspricht die Anordnung gemäß FIG 2 der Anordnung gemäß FIG 1.

FIG 3 zeigt ein Diagramm für eine Drehzahlfestlegung der ersten elektrischen Energieaustauschmaschine 4 des kinetischen Energiespeichers 3. Die erste elektrische Energieaustauschmaschine 4 ist als Asynchronmaschine ausgebildet und somit ist das Diagramm für die Anordnung gemäß FIG 1 vorgesehen.

Die x-Achse (Abszisse) des Diagramms zeigt die Drehzahl der elektrischen Antriebsmaschine 2 und die y-Achse (Ordinate) das Drehmoment der elektrischen Antriebsmaschine 2.

Die Prozesskennlinie 11 zeigt eine Momentenkennlinie eines typischen Umformprozesses. Dabei ist der zeitliche Ablauf des Umformprozesses mittels der Pfeile nachgebildet. Die senkrechten Pfeile zeigen das unmittelbare Umformmoment, wobei sich dann die Abbremsphase anschließt und dann auf eine Beschleunigungsphase wieder der Umformschritt folgt usw.

Mit dem Bezugszeichen 23 ist die Motormomentenkennlinie der elektrischen Antriebsmaschine 2 dargestellt. Die Kennlinie 12 zeigt die Festlegung der Drehzahl für die erste elektrische Energieaustauschmaschine 4.

Für eine effiziente Auslegung des kinetischen Energiespeichers 3 ist die Festlegung der Drehzahl-Kennlinie 12 der ersten elektrischen Maschine 4 von Bedeutung. Zur flexiblen Drehzahleinstellung (Schlupfeinstellung) muss die sich aus der mechanischen Drehfrequenz der ersten elektrischen Maschine 4 ergebende elektrische Rotorfrequenz über den Umrichter 5 im Drehzahlbereich der Prozesskennlinie 11 verschoben werden. Es ist umso mehr Umrichterleistung nötig, je größer der Betrag der Frequenzverschiebung und je größer die dabei vom System 1 bzw. dem Prozess geforderte Leistung ist. Abhängig vom Prozess 11 kann somit durch geeignete Drehzahlfestlegung der ersten elektrischen Maschine 4 für eine minimal notwendige Umrichterleistung gesorgt werden.

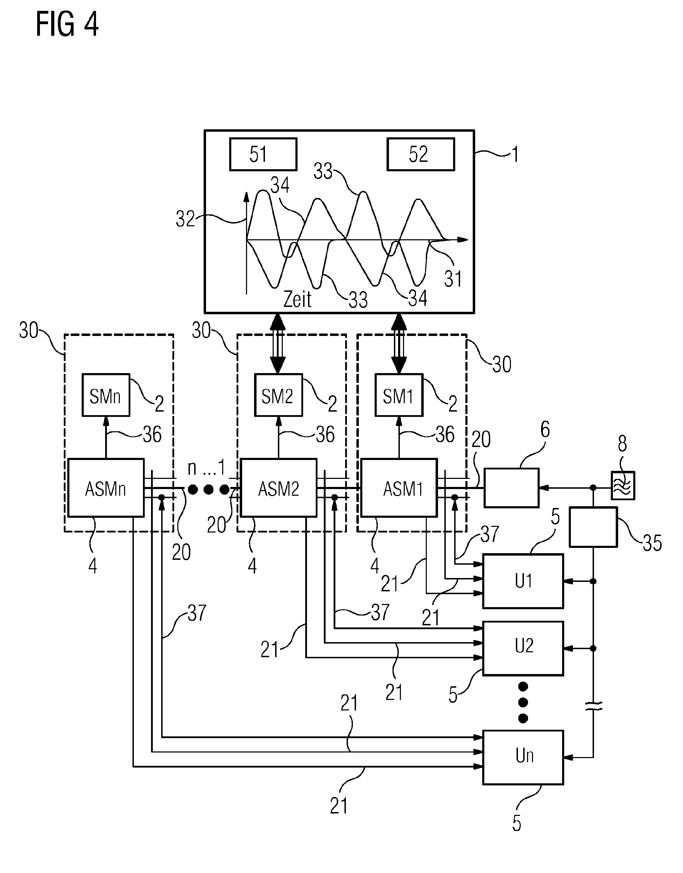

Die Darstellung gemäß FIG 4 zeigt eine Anordnung, welche drei Antriebsverbünde 30 aufweist. Ein erster Antriebsverbund 30 weist auf:
- eine erste elektrische Antriebsmaschine 2, welche eine Synchronmaschine SM1 ist,
- eine erste elektrische Energieaustauschmaschine 4, welche eine Asynchronmaschine ASM1 ist, und
- eine elektrische Verbindung 36 zwischen der ersten elektrischen Antriebsmaschine 2 und der ersten elektrischen Energieaustauschmaschine 4.

Ein zweiter Antriebsverbund 30 weist auf:
- eine zweite elektrische Antriebsmaschine 2, welche eine Synchronmaschine SM2 ist,
- eine zweite elektrische Energieaustauschmaschine 4, welche eine Asynchronmaschine ASM2 ist, und
- eine elektrische Verbindung 36 zwischen der zweiten elektrischen Antriebsmaschine 2 und der zweiten elektrischen Energieaustauschmaschine 4.

Eine Anordnung kann Antriebsverbünde 1 bis n aufweisen.

Ein n'te Antriebsverbund 30 weist auf:
- eine n'te elektrische Antriebsmaschine 2, welche eine Synchronmaschine SMn ist,
- eine n'te elektrische Energieaustauschmaschine 4, welche eine Asynchronmaschine ASMn ist, und
- eine elektrische Verbindung 36 zwischen der n'ten elektrischen Antriebsmaschine 2 und der n'ten elektrischen Energieaustauschmaschine 4.

Die Asynchronmaschinen ASM1, ASM2 und ASMn sind mechanisch mittels einer mechanischen Kopplung 20 miteinander zusammen gekoppelt. Die mechanische Kopplung 20 ist zum Beispiel eine Welle, welche die Läufer der Asynchronmaschinen mechanisch miteinander verbindet.

Dem ersten Antriebsverbund ist ein erster Umrichter U1, dem zweiten ein zweiter Umrichter U2 und dem dritten ein dritter Umrichter U3 zugeordnet. Diese Umrichter 5 sind über Signalleitungen 21 mit dem jeweiligen Antriebsverbund 30 verknüpft. Die Umrichter 5 sind an ein Stromnetz 8 angeschlossen. Zwischen dem Netz 8 und den Umrichtern 5 kann sich noch eine Koppeleinrichtung 35 befinden (Alm). Diese Koppeleinrichtung 35 ist beispielsweise eine Drossel oder ein Schalter. Die Umrichter 5 sind über elektrische Leitungen 37 elektrisch mit Schleifringen 9 der Asynchronmaschinen 4 verbunden.

Mit der mechanischen Kopplung ist auch die elektrische Speisemaschine 6 verbunden. Leistung bezieht die elektrischen Speisemaschine 6 vom Netz 8.

Die dargestellte Anordnung erlaubt es auch getrennte Einzelprozesse energetisch direkt zu koppeln, so dass ein Energiesaustausch möglich wird. Das System 1 weist beispielsweise einen ersten Prozess mit einem ersten Leistungsverlauf 33 und einen zweiten Prozess mit einem zweiten Leistungsverlauf 34 auf. Die Leistungsverläufe sind gemäß FIG 4 in einem Diagramm aufgetragen, wobei über eine Ordinate 32 eine Leistung aufgetragen ist und über eine Abszisse 31 eine Zeit aufgetragen ist. Die erste elektrische Antriebsmaschine ist dem ersten Prozess zugeordnet und die zweite elektrische Antriebsmaschine ist dem zweiten Prozess zugeordnet. Der erste Leistungsverlauf 33 ergibt sich dabei in einem ersten Arbeitssystem 51 und der zweite Leistungsverlauf 34 ergibt sich in einem zweiten Arbeitssystem 52. Das erste Arbeitssystem 51 und das zweite Arbeitssystem 52 bilden ein gemeinsames System 1.

Gemäß FIG 4 sind, wie bereits ausgeführt, mehrere Antriebsverbünde 30 parallel gezeigt, bei denen jeweils ein Schleifringläufer (ASM1 bis n) mit einem Synchronmotor (SM1 bis n) direkt verschalten ist. Eine energetische Kopplung der Einzelprozesse ist bei dieser Antriebsvariante durch eine einfache mechanische Kopplung der Schleifringläufer (ASM1 bis n) möglich.

Aus einer Anordnung dieser Art oder auch aus einer Anordnung entsprechender Art können sich verschieden Vorteile ergeben. Nachfolgend sind einige mögliche Vorteile aufgeführt:
- durch die gezeigte Anordnung können Einzelprozesse mit hohen Spitzenlastanteilen energetische sehr direkt und auf einfachste Art und Weise miteinander gekoppelt werden;
- durch die direkte Kopplung mit nur wenigen Zwischenelementen (keine Motormodule wie z.B. bei der Zwischenkreiskopplung) entstehen nur wenig Verluste, wodurch eine hohe Energieeffizienz erreichbar ist;
- da die Art der Kopplung zum Großteil auf physikalischen Grundeigenschaften der beteiligten Elemente beruht, ist mit einem nur geringen Aufwand für die Inbetriebnahme eines solchen Systems zu rechnen;
- durch die direkte Kopplung der Einzelprozesse dienen diese untereinander gewissermaßen als Energiespeicher, wodurch der gerätetechnische Aufwand am eigentlichen Energiespeicher reduziert werden kann;
- bei einer kinetischen Energiespeicherung mit Schleifringläufern ergibt sich durch die Kopplung der Einzelantriebssysteme der Vorteil, dass nicht mehr n Speisemaschinen benötigt werden, sondern nur noch eine.

Anordnungen wie sie nach den Figuren 1 und 2 beschrieben sind können entsprechend der Lehre nach FIG 4 parallel geschalten werden. Dabei kann z.B. kein Schwungrad, nur ein Schwungrad oder auch mehrere Schwungränder zum Einsatz kommen. Ein kinetischer Energiespeicher weist dabei zumindest eine elektrische Energieaustauschmaschine auf. Der kinetische Energiespeicher kann darüber hinaus noch weitere Drehkörper aufweisen, welche zum Speichern von kinetischer Energie geeignet sind.

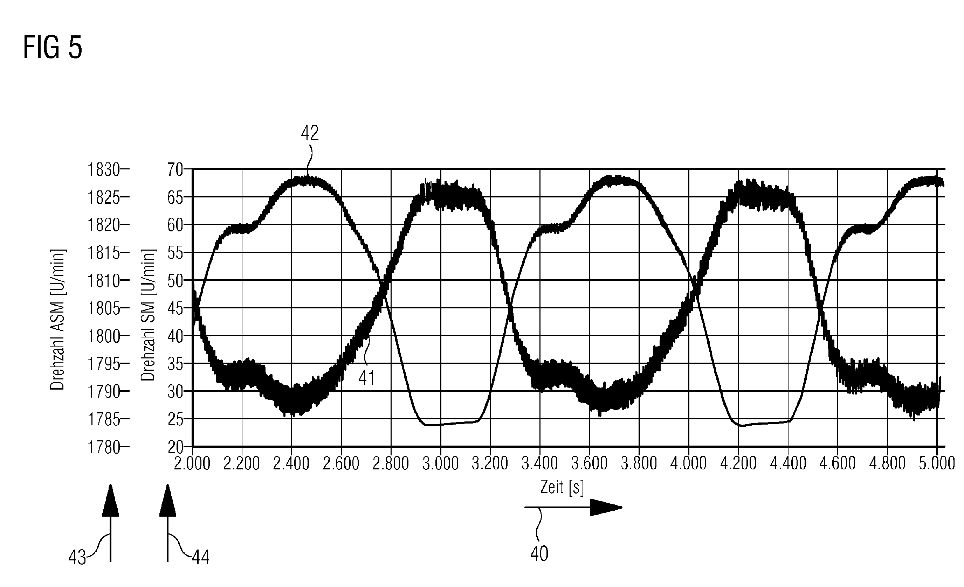

Die Darstellung gemäß FIG 5 zeigt Signale bei einer vorgenommenen Energiepufferung unter Verwendung einer der beschriebenen Anordnungen. Ein Lastzyklus wird derart simuliert, dass mit der Synchronmaschine ein bestimmtes zyklisches Drehzahlprofil gefahren wird. Dieses Profil ist mit dem Bezugszeichen 42 gekennzeichnet. Der notwendige Leistungszufluss bzw. Leistungsabfluss führt zu einem spiegelbildlich verlaufenden Drehzahlprofil der elektrisch direkt gekoppelten Asynchronmaschine (kinetischer Energiespeicher). Das Profil der Asynchronmaschine ist mit dem Bezugszeichen 41 gekennzeichnet. Die Darstellung gibt in der Abszisse die Zeit 40 wieder und in der Ordinate die Drehzahl 43 der Asynchronmaschine und die Drehzahl der Synchronmaschine 44. Die Wechsellastanteile in der Drehzahl und folglich auch in der Leistung können zu einem hohen Maße in Form von kinetischer Energie in der elektrisch direkt gekoppelten Asynchronmaschine gepuffert werden.

Einzelprozess können in einfacher Weise energetisch gekoppelt werden. Überschüssige beziehungsweise mangelnde elektrische Energie in der Synchronmaschine kann von dem Schleifringläufer direkt in bzw. aus mechanischer Energie gewandelt werden. Mechanische Energieflüsse von bzw. in den Schleifringläufer können entweder in Form von Drehzahländerungen (Änderung der kinetischen Energie) gepuffert werden, oder direkt in Form eines Drehmomentes bei entsprechender Drehzahl an einen mechanisch gekoppelten Schleifringläufer eines zweiten Einzelsystems weitergegeben werden.

## Patentansprüche

1. Anordnung zur Leistungszuführung an ein System (1) welche
• eine erste elektrische Antriebsmaschine (2), welche mechanische Leistung an ein erstes Arbeitssystem (51) abgeben und/oder von diesem aufnehmen kann, wobei das erste Arbeitssystem (51) mechanische Leistung bzw. mechanische Energie aufnehmen und/oder abgeben kann,
• eine zweite elektrische Antriebsmaschine (2), welche mechanische Leistung an ein zweites Arbeitssystem (52) abgeben und/oder von diesem aufnehmen kann, wobei das zweite Arbeitssystem (52) mechanische Leistung bzw. mechanische Energie aufnehmen kann,
• einen ersten kinetischen Energiespeicher (3,4), welcher eine erste elektrische Energieaustauschmaschine (4) aufweist, die mit der ersten elektrischen Antriebsmaschine (2) elektrisch verbunden ist,
• einen zweiten kinetischen Energiespeicher (3,4), welcher eine zweite elektrische Energieaustauschmaschine (4) aufweist, die mit der zweiten elektrischen Antriebsmaschine (2) elektrisch verbunden ist,
aufweist, wobei der erste kinetische Energiespeicher (3,4) mit dem zweiten kinetischen Energiespeicher (3,4) gekoppelt ist.

2. Anordnung nach Anspruch 1, wobei der ersten kinetischen Energiespeicher (3,4) mit dem zweiten kinetischen Energiespeicher (3,4) mechanisch gekoppelt ist, wobei die Kopplung (20) beispielsweise eine Welle und/oder eine Kupplung aufweist.

3. Anordnung nach Anspruch 1 oder 2, mit einer Speisemaschine 6, welche dem ersten kinetischen Energiespeicher 4 und/oder dem zweiten kinetischen Energiespeicher (4) mechanische Energie zuführen kann.

4. Anordnung nach einem der Ansprüche 1 bis 3, wobei der erste kinetische Energiespeicher (4) gespeicherte kinetische Energie über die erste elektrische Energieaustauschmaschine (4) und die erste elektrische Antriebsmaschine (2) an das erste Arbeitssystem (52) abgeben kann, und wobei der zweite kinetische Energiespeicher (4) über die zweite elektrische Energieaustauschmaschine (4) und die zweite elektrische Antriebsmaschine gespeicherte elektrische Energie an das zweite Arbeitssystem (52) abgeben kann.

5. Anordnung nach einem der Ansprüche 1 bis 4, wobei das erste Arbeitssystem (51) mit dem zweiten Arbeitssystem (52) energetisch derart gekoppelt ist, dass die Arbeitssysteme (51,52) zur gleichen Zeit unterschiedliche Lasten aufweisen können.

6. Anordnung nach einem der Ansprüche 1 bis 5, wobei einer ersten elektrischen Antriebsmaschine (2) eine erste elektrische Energieaustauschmaschine (4) und der ersten elektrischen Energieaustauschmaschine (4) ein erster Umrichter (5) zugeordnet ist, wobei
einer zweiten elektrischen Antriebsmaschine (2) eine zweite elektrische Energieaustauschmaschine (4) und der zweiten elektrischen Energieaustauschmaschine (4) ein zweiter Umrichter (5) zugeordnet ist, und wobei
die erste elektrische Energieaustauschmaschine (4) und die zweite elektrische Energieaustauschmaschine (4) derart mechanisch gekoppelt sind, dass dieser ein Teil eines einzigen kinetischen Energiespeichers sind.

7. Anordnung nach einem der Ansprüche 1 bis 6, wobei die erste elektrische Antriebsmaschine (2) und die erste elektrische Energieaustauschmaschine (4) jeweils eine Ständerwicklung aufweisen, wobei die beiden Ständerwicklungen der ersten elektrischen Antriebsmaschine (2) und der ersten elektrischen Energieaustauschmaschine (4) direkt elektrisch verbunden sind.

8. Anordnung nach einem der Ansprüche 1 bis 7, wobei die erste elektrische Antriebsmaschine (2) und die erste elektrische Energieaustauschmaschine (4) eine Kombination aus Synchronmaschine und Asynchronmaschine sind.

9. Anordnung nach Anspruch 8, wobei die erste Asynchronmaschine als Schleifringläufer ausgebildet ist.

10. Anordnung nach einem der Ansprüche 1 bis 9, wobei die erste elektrische Antriebsmaschine (2) eine variable Drehzahlregelung aufweist.

11. Anordnung nach Anspruch 10, wobei ein erster Umrichter (5) zur variablen Drehzahlregelung der ersten elektrischen Antriebsmaschine (2) vorgesehen ist, wobei insbesondere mittels des ersten Umrichters (5) eine elektrische Frequenz der als Schleifringläufer ausgeführten ersten elektrischen Asynchronmaschine einstellbar ist, wobei insbesondere Richtung und Intensität eines Leistungsflusses zwischen der elektrischen Antriebsmaschine und der elektrischen Maschine über eine Verschiebung der elektrischen Frequenz des Schleifringläufers gegenüber einer elektrischen Frequenz der Synchronmaschine mittels des Umrichters (5) variabel einstellbar ist.

12. Anordnung nach einem der vorhergehenden Ansprüche, wobei ein bidirektionaler Leistungsfluss zwischen dem System (1) und dem kinetischen Energiespeicher realisiert ist, welcher insbesondere vom System geforderte Leistungsspitzen von einem Netz fernhält bzw. Leistungsspitzen reduziert, wobei das System (1) zumindest zwei Arbeitssystem (51,52) aufweist und die Arbeitssystem (51,52) jeweils der ersten bzw. zweiten Arbeitsmaschine (2) zugeordnet sind.

13. Anordnung nach einem der vorhergehenden Ansprüche, wobei der kinetische Energiespeicher eine elektrische Speisemaschine aufweist, welche zur kontinuierlichen Leistungsspeisung des kinetischen Energiespeichers dient, wobei insbesondere die elektrische Speisemaschine (6) wahlweise ohne Drehzahlregelung direkt an dem Netz (8) oder mit Drehzahlregelung über einen weiteren Umrichter (10) betrieben ist.

14. Anordnung nach Anspruch 13, wobei die elektrische Speisemaschine (6) als Asynchronmaschine, insbesondere als Kurzschlussläufer, ausgebildet ist.
